Europäisches Patentamt

European Patent Office

Office européen des brevets

(11) Publication number: **0 274 833**
**A2**

(12) **EUROPEAN PATENT APPLICATION**

(21) Application number: **87310261.0**

(22) Date of filing: **20.11.87**

(51) Int. Cl.⁴ **F15B 9/10**

(30) Priority: **13.01.87 GB 8700652**

(43) Date of publication of application:
**20.07.88 Bulletin 88/29**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Smith, Trevor Stanley**
**3 Streather Road**
**Four Oaks Sutton Coldfield B75 6RB(GB)**

(74) Representative: **Cuddon, George Desmond et al**
**MARKS & CLERK Alpha Tower Suffolk Street Queensway**
**Birmingham B1 1TT(GB)**

(54) **Fluid powered servo system.**

(57) An output member (15) is positioned by a servo pressure derived from between two variable fluid flow restrictors (18, 19) connected in series between a high pressure (HP) and a low pressure (LP). The flow area of a first restrictor (19) is variable by an input quantity to which the output member (15) is required to respond and the flow area of a second restrictor (18) is varied by movement of said output member (15) to change the servo pressure in a sense to oppose movement of the output member (15). In one embodiment the output member (15) incorporates a control element (20, 22) for the second restrictor (18).

FIG 2.

EP 0 274 833 A2

## "FLUID POWERED SERVO SYSTEM"

It is known to provide fluid-powered servo systems in which an output member is movable to a position which corresponds to that of a selector control valve. Such known systems incorporate a follower arrangement which links the output member and the control valve, such that the latter is responsive to both the desired and actual positions of the output member, movement of the latter being arrested when those positions coincide.

It is a disadvantage of such known systems that they require relatively complex feedback devices such as linkages or electric circuits which interconnect the control valve and the output member. It is an object of the invention to provide a fluid powered actuator system in which position control is achieved without the use of linkages or electric feedback circuits.

As disclosed hereafter the invention is applicable to a servo pressure operated spill valve for an engine fuel control system, the position of the spill valve control element corresponding to that of a selector valve which is responsive to an operating condition of the engine.

According to the invention there is provided a fluid powered servo system comprising an output member responsive to operating pressure, and first and second fluid flow restrictors connected in series between a high pressure and a lower pressure, said operating pressure being derived from a zone between said restrictors, the flow area of said first restrictor being variable by a first control element movable in response to an input quantity to which said output member is required to respond, and the flow area of said second restrictor being variable by a second control element movable with said output member so as to vary said operating pressure in a sense to oppose pressure variation resulting from movement of said first control element.

An embodiment of the invention will now be described by way of example only and with reference to the accompanying drawings in which:-

Figure 1 is a functional diagram of a fuel control system for a gas turbine engine, incorporating an actuator arrangement for a spill control valve, and

Figure 2 shows in more detail a spill valve and actuator arrangement forming part of Figure 1.

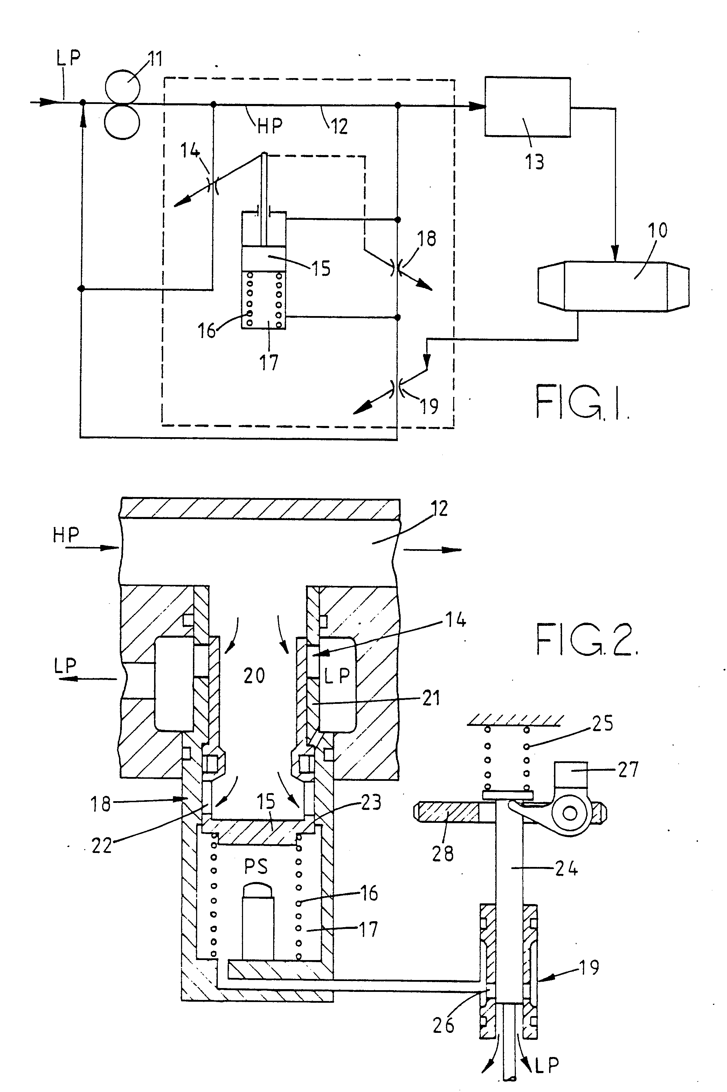

As shown in Figure 1 a gas turbine engine 10 is supplied with fuel by a pump 11 by way of a supply passage 12 and a variable metering device 13. The device 13 may be of any known type and forms no part of the present invention. Fuel may be spilled from the passage 12 by means of a valve 14 operated by a piston and cylinder actuator 15. The actuator 15 is urged by the pressure HP in passage 12 to open the valve 14, and in a direction to shut the valve 14 by a spring 16 and by an operating pressure in a chamber 17. The operating pressure in chamber 17 is controlled by two variable flow restrictors 18, 19 connected in series between the passage 12 and the pressure LP at the inlet of the pump 11, the pressure in chamber 17 being that between the restrictors 18, 19.

As shown in Figure 2 the valve 14 comprises an annular control element 20 movable relative to a ported sleeve 21. The control element 20 is also provided with ports 22 which co-operate with a metering edge 23 in the sleeve 21 to define the flow restrictor 18. The flow restrictor 19 is provided by a spool control element 24 which is biased by a spring 25 to shut off ports 26 which communicate with the chamber 17. The control element 24 is movable against the spring 25 by one or more governor weights 27 mounted on a carrier 28 which is drivingly connected to the high pressure shaft of the engine 10. The arrangement is such that if the speed NH of the high pressure shaft rises above a predetermined level the increase in flow area of the restrictor 19 reduces the pressure in chamber 17 and allows the control element of the valve 14 to be moved to an open position by the pressure in passage 12. This movement opens the restrictor 18 and increases the pressure in chamber 17 to oppose the aforesaid movement. The arrangement is therefore such that when the engine shaft speed NH is above a predetermined level the control element 20 will move to an equilibrium position for each operating position of the spool 24. The control element 20 thus has a proportional, as distinct from an integrating, response to the position of the spool 24.

## Claims

1. A fluid powered servo system comprising an output member (15) responsive to an operating pressure, and first (19) and second (18) fluid flow restrictor connected in series between a higher pressure (HP) and a lower pressure (LP), said operating pressure being derived from a zone between said restrictors (18, 19), the flow area of said first restrictor (19) being variable by a first control element (24) movable in response to an input quantity (NH) to which said output member (15) is required to respond, characterised in that the flow area of said second restrictor (18) is variable by a second control element (20) movable with said output member (15) so as to vary said operating pressure in a sense to oppose pressure variation resulting from movement of said first control element (24).

2. A fluid powered servo system as claimed in Claim 1 in which said second control element (20) is also operable to control flow through a fluid control valve (14).

3. A fluid powered servo system in which said fluid control valve (14) is a spill valve communicating with a fuel supply passage (12) to an engine (10).

4. A fluid powered servo system as claimed in Claim 3 in which said input quantity is a speed (NH) of said engine (10).

5. A fluid powered servo system as claimed in Claim 4 in which said spill valve (14) is responsive to rise of said engine speed (NH) above a predetermined level to spill fuel from said supply passage (12).

LP

11

HP

12

14

15

16

17

18

19

13

10

FIG.1.

FIG.2.

12

HP

LP

LP

14

21

20

18

22

15

23

PS

16

17

25

27

28

24

26

19

LP